# EUROPÄISCHE PATENTSCHRIFT

(11) **EP 2 988 584 B1**
(45) Veröffentlichungstag und Bekanntmachung des Hinweises auf die Patenterteilung: **14.06.2017**
(21) Anmeldenummer: 14723694.7
(22) Anmeldetag: 17.04.2014
(51) Int. Cl.: A01B 63/114, A01B 63/32, A01B 49/02

(54) **BODENBEARBEITUNGSGERÄT ZUM ANBAU AN EIN ZUGFAHRZEUG**
SOIL CULTIVATION IMPLEMENT FOR ATTACHMENT TO A TOWING VEHICLE
APPAREIL DE TRAITEMENT DU SOL DESTINÉ À ÊTRE MONTÉ SUR UN VÉHICULE TRACTEUR

(30) Priorität: 24.04.2013 DE 102013007038
(43) Veröffentlichungstag der Anmeldung: 02.03.2016
(73) Patentinhaber: Lemken GmbH & Co. KG, 46519 Alpen (DE)
(72) Erfinder: PAULESSEN, Georg, 41749 Viersen (DE); KARSTEN, Sebastian, 46509 Xanten-Lüttingen (DE); MAAS, Ludger, 47665 Sonsbeck (DE); ACHTEN, Georg, 47918 Tönisvorst (DE); HAPPE, Christoph, 46519 Alpen (DE)
(74) Vertreter: Schulte & Schulte
(86) Internationale Anmeldenummer: PCT/DE2014/000204
(87) Internationale Veröffentlichungsnummer: WO 2014/173388

(56) Entgegenhaltungen:
- EP-A1- 2 232 974
- EP-A1- 2 564 679
- WO-A1-2013/036191

## Beschreibung

Die Erfindung beschreibt ein Bodenbearbeitungsgerät nach dem Oberbegriff von Anspruch 1.

Derartige Bodenbearbeitungsgeräte, wie z.B. in der Patentanmeldung DE 10 2010 054 946 A1 beschrieben, weisen zunehmend höhere Gewichte auf, welche von der Hubeinrichtung des Zugfahrzeuges getragen werden müssen und dessen Vorderachse entlasten und somit die Lenkfähigkeit des Zugfahrzeuges beinträchtigen können. Es sind Geräte bekannt geworden, welche mittels Hilfsfahrgestellen einen Teil des Gerätegewichtes auf den Boden abstützen und somit das Zugfahrzeug entlasten. Dabei werden die Hilfsfahrgestelle mit Hydraulikzylindern beim Transport des Gerätes abgesenkt und während der Arbeit des Gerätes über den Boden ausgehoben. Die deutsche Offenlegung DE 2 556 342 A1 beschreibt eine solche Einrichtung. Auch die Patentanmeldung DE10 224 861 A1 hat eine Hilfseinrichtung zur Entlastung des Zugfahrzeuges zum Gegenstand. Dabei wird der Hydraulikzylinder zum Absenken des Hilfsfahrgestelles nur mit einem begrenzten Druck beaufschlagt, um das Fahrgestell auf unebener Fahrbahn nicht zu überlasten. Die deutsche Offenlegungsschrift DE 43 06 145 A1 zeigt ein aufgesatteltes Bodenbearbeitungsgerät, welches lenkbar mit einer Deichsel an einen Schwenkpflug angehängt ist. Die Patentanmeldungen EP 2 422 598 A2, DE 10 2009 014 874 A1 und DE 199 08 241 A1 befassen sich jeweils mit gezogenen Bodenbearbeitungsgeräten, welche mit hydraulischen Fahrgestellen sowie einer weiteren Bodenbearbeitungseinrichtung in Form einer Druckwalze versehen sind. Durch die hydraulische Betätigung der Fahrgestelle wird ein Teil deren Gewichtes während der Arbeit mittelbar auf die Druckwalze übertragen.

Aufgabe der nachfolgend beschriebenen Erfindung ist es, ein einfaches System zur Verbesserung der Achslasten des Zugfahrzeuges bereitzustellen, welches ohne teure hydraulische Komponenten auskommt und somit kostengünstig hergestellt werden kann und im Arbeitsbetrieb keine Fahrspuren auf dem Boden hinterlässt. Zudem soll der Maschinenbediener von komplexen Bedienvorgängen entlastet werden.

Diese Aufgabe wird erfindungsgemäß nach den kennzeichnenden Merkmalen des Anspruchs 1 gelöst, wobei in den weiteren Patentansprüchen in vorteilhafter Weise ergänzende und alternative Lösungen beansprucht werden.

Indem das Fahrwerk und die zusätzliche Bodenbearbeitungseinrichtung, welche jeweils drehbar oder schwenkbar an dem Grundrahmen gelagert sind, mit einem Verbindungselement oder -glied beweglich zueinander gekoppelt sind und somit ein bewegliches Viergelenk bilden, hebt sich das Fahrgestell in einer abgesenkten Stellung über den Boden aus und bildet keine Fahrspuren im bearbeiteten Boden, welche nachfolgende Aussaatvorgänge negativ beeinflussen können. Zugleich wird ein Anteil des Gewichtes des Fahrgestelles auf die zusätzliche Bodenbearbeitungseinrichtung übertragen und verbessert in vorteilhafter Weise deren Wirkung. Wird nun das Bodenbearbeitungsgerät durch das Zugfahrzeug angehoben, senkt sich das Fahrgestell durch die Wirkung des beweglichen Viergelenkes auf den Boden ab. Dabei wird zugleich über das mehrteilige Verbindungselement, welches das Fahrgestell mit der zusätzlichen Bodenbearbeitungseinrichtung verbindet, die zusätzliche Bodenbearbeitungseinrichtung über den Boden ausgehoben und ermöglicht so eine Wendefahrt auf dem Acker oder eine Transportfahrt auf der Straße. Das Gewicht der zusätzlichen Bodenbearbeitungseinrichtung stützt sich dabei über das Fahrgestell und dessen Laufrad zum Boden hin ab und verringert den Hubkraftbedarf der Zugmaschine und die Entlastung ihrer Vorderachse. Die Lenkfähigkeit des Gespanns aus Zugmaschine und Bodenbearbeitungsgerät wird verbessert oder bleibt erhalten. Ein zusätzlicher Hydraulikzylinder zur Betätigung des Fahrgestelles wird nicht mehr benötigt. Auch wird der Maschinenbediener entlastet, indem er außer dem Hubwerk keine weiteren Elemente für den Aushubvorgang bedienen muss.

Das Verbindungselement ist zwischen dem Fahrwerk und der zusätzlichen Bodenbearbeitungseinrichtung angeordnet, konkret empfiehlt es sich, wenn das Verbindungselement zwischen dem Rahmen der zusätzlichen Bodenbearbeitungseinrichtung und dem Fahrwerksrahmen positioniert ist und zwar am zweckmäßigsten zumindest annähernd mittig des Rahmens der zusätzlichen Bodenbearbeitungseinrichtung.

Was die Ausbildung des Verbindungselementes betrifft, so sieht eine bevorzugte Ausführungsform der Erfindung vor, dass das Verbindungselement als Getriebekoppel ausgebildet ist. Dieses mehrteilige Element kann in seiner Länge beweglich, elastisch oder mehrteilig ausgeführt sein. Insbesondere ist daran gedacht, dass als Getriebemechanismus ein als Viergelenkkoppel ausgebildetes Getriebekoppel dient. Diese Getriebeanordnung ermöglicht eine optimale Verteilung der Gewichte, etwa wenn der Grundrahmen mit seinem Eigengewicht in die Lage versetzt wird, bei Kontakt der Bodenbearbeitungswerkzeuge des weiteren Rahmens zum Boden das Fahrwerk mit seinem Laufrad über den Boden anzuheben.

Es wurde bereits angesprochen, dass die drehbare bzw. schwenkbare Lagerung von Fahrwerk und zusätzlicher Bodenbearbeitungseinrichtung am Grundrahmen die Ausbildung eines vorteilhaften Viergelenkes mit sich bringen. In diesem Sinne ist vorgesehen, dass der Grundrahmen, der Rahmen, der Fahrwerksrahmen und das Verbindungselement ein bewegliches Viergelenk bilden, dass also das erfindungsgemäße Verbindungselement in das Viergelenk integriert ist. Die gelenkige Ausbildung und/oder Anordnung des Verbindungselementes erweist sich also in diesem Zusammenhang als besonders vorteilhaft.

Zum Aufbau des mehrteiligen Verbindungselementes bzw. -gliedes ist daran gedacht, dass das Verbindungselement eine dem Rahmen zugeordnete Lasche und eine dem Fahrwerksrahmen zugeordnete Lasche aufweist, wobei beide Laschen mittels mindestens eines Verbindungsmittels miteinander verbunden sind, etwa durch Bolzen oder Schrauben. Damit ist über den Grundrahmen mit seinen Gelenkpunkten, den Rahmen der zusätzlichen Bodenbearbeitungseinrichtung und den Fahrwerksrahmen mit ihren jeweiligen Laschen sowie das Verbindungsmittel ein Viergelenkskoppel ausgebildet.

Es ist außerdem erfindungsgemäß vorgesehen, dass das zumindest eine Laufrad lenk- oder drehbar zum Fahrwerksrahmen angeordnet ist. Hierdurch ist ein Nachlaufen des Laufrades bei Kurvenfahrt ermöglicht, welches bei Wendevorgängen auf dem Feld weniger tiefe Fahrspuren im Boden hinterlässt und zudem die mechanische Belastung auf den Fahrwerksrahmen und angrenzende Bauteile verringert. Dies ist zum Beispiel durch eine Ausführung des Laufrades als sogenanntes Spornrad gegeben. Auch andere passive oder aktive Lenksysteme sind denkbar.

In einer weiteren Ausführungsform ist das Fahrwerk durch zusätzliche Mittel in seiner Bewegung zum Grundrahmen hin arretierbar ausgebildet. Hierdurch wird die Beweglichkeit des Viergelenkes zwar eingeschränkt, jedoch kann insbesondere in schwierigen Bodenverhältnissen ein Teil des Fahrgestellgewichtes auf den Grundrahmen und die daran befestigten Bodenbearbeitungswerkzeuge übertragen werden, um auch deren Wirkung zu verbessern. Bei Transportfahrten kann diese Arretierung wieder entriegelt werden. Die Entlastung der Schleppervorderachse ist wieder hergestellt.

Nach einer weiteren zweckmäßigen Variante sind Mittel zur Begrenzung der Beweglichkeit der zusätzlichen Bodenbearbeitungseinrichtung vorgesehen, welche durch Fremdkraft in einer oder mehreren Wirkrichtungen verstellbar ausgebildet sind. Durch den Einsatz von Stellmotoren kann die Beweglichkeit der zusätzlichen Bodenbearbeitungseinrichtung auf leichte Weise begrenzt werden. Hierdurch wird eine variable Arbeitstiefeneinstellung der vorderen Bodenbearbeitungswerkzeuge erreicht. Zugleich kann damit variabel weiteres Gewicht des gesamten Bodenbearbeitungsgerätes auf das Fahrgestell übertragen werden. Dies ist beim Einsatz von besonders leichten oder besonders schweren Zugfahrzeugen von Vorteil, um deren zulässige Achslasten nicht zu überschreiten. Auch kann variabel die Gewichtsübertragung des Fahrgestelles auf den vorderen Grundrahmen oder das zusätzliche Bodenbearbeitungsgerät festgelegt werden.

In einer weiteren Ausführung ist der Fahrwerksrahmen vorzugweise einarmig oder aus einem einzigen Ausleger bestehend ausgebildet. Hierdurch ergibt sich eine besonders kostengünstige und schlanke Bauweise. Insbesondere die Anbringung einer Spornradlagerung ist hier in stabiler und einfacher Weise möglich.

Eine weitere vorteilhafte Ausführungsform hat zum Gegenstand, dass das Bodenbearbeitungsgerät von einer größeren Breite in Arbeitsstellung in eine kleinere Breite in Transportstellung und umgekehrt klappbar oder veränderbar ist. Bodenbearbeitungsgeräte mit besonders großer Arbeitsbreite, welche mit unter ein Mehrfaches der Transportbreite betragen, sind meist als gezogene, angehängte Fahrzeuge ausgebildet. Hier werden die Vorteile eines angebauten Gerätes hinsichtlich Kosten, Handhabbarkeit und Wendigkeit mit großer Leistungsfähigkeit vereint.

In einer anderen Ausführungsform besteht das zusätzliche Bodenbearbeitungsgerät aus mehreren Segmenten, wobei den Segmenten und / oder dem Fahrwerk zumindest eine weitere Quertraverse zugeordnet ist, welche die Segmente des zusätzlichen Bodenbearbeitungsgerätes und das Fahrwerk zumindest mittelbar miteinander verbindet. Ist das zusätzliche Bodenbearbeitungsgerät in seiner Arbeitsbreite unterteilt, ermöglichen die einzelnen Segmente insbesondere bei in Längsrichtung drehbarer Lagerung eine verbesserte Bodenanpassung. Durch Hinzunahme einer Quertraverse, welche als Verbindungselement oder -glied fungiert oder weitere Verbindungselemente enthält, kann das Gewicht der einzelnen Segmente zusammen auf das Fahrwerk übertragen oder das Fahrwerksgewicht gleichmäßig auf die einzelnen Segmente abgestützt werden.

Nach einer besonderen Ausführungsform ist dem Bodenbearbeitungsgerät ein zusätzliches Tragfahrzeug zugeordnet, welches mit einer Hubeinrichtung versehen ist. Insbesondere leistungsfähige Zugfahrzeuge wie Raupen- oder Knickschlepper verfügen nicht immer über eine eigene oder geeignete Hubeinrichtung. Durch Verwendung eines zusätzlichen Tragfahrzeuges mit Hubeinrichtung kann das erfindungsgemäße Bodenbearbeitungsgerät auch mit diesen Zugfahrzeugen verwendet werden. Dabei ist es sogar möglich, mehrere solche Bodenbearbeitungsgeräte nebeneinander anzuordnen. Die beim Aushub der Geräte auf das Tragfahrzeug erzeugte, negative Stützlast zum Zugfahrzeug hin wird durch die Erfindung wesentlich verringert.

Weitere Einzelheiten sind den Figuren und der nachfolgenden Figurenbeschreibung zu entnehmen. Es zeigen:
- Fig. 1: ein Bodenbearbeitungsgerät in perspektivischer Ansicht,
- Fig. 2: ein Zugfahrzeug mit Bodenbearbeitungsgerät in ausgehobener Stellung in Seitenansicht und
- Fig. 3: ein Zugfahrzeug mit Bodenbearbeitungsgerät in abgesenkter Stellung in Seitenansicht.

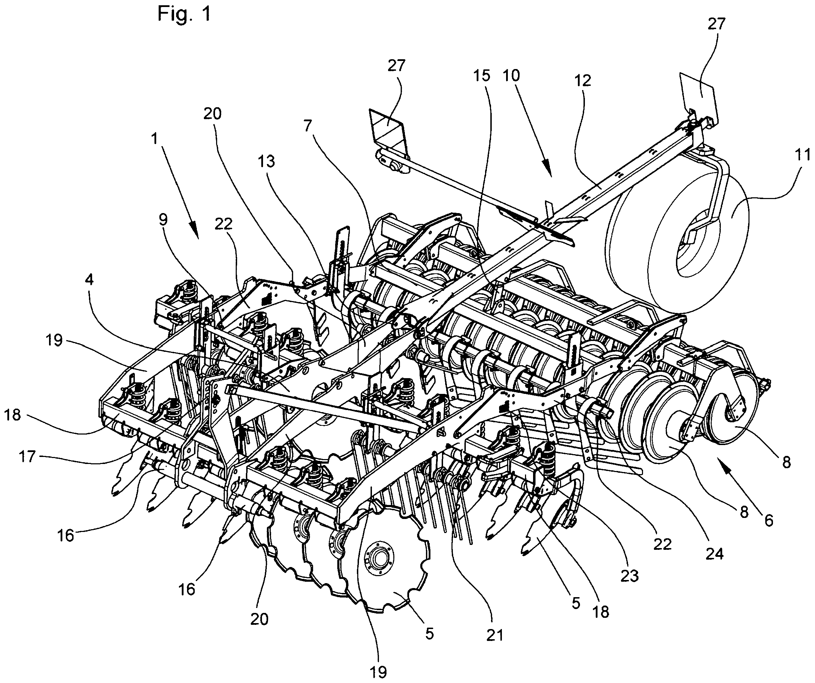

Fig. 1 zeigt ein Bodenbearbeitungsgerät, welches über die Koppelpunkte 16 und 17 mit der Hubeinrichtung 3 des Zugfahrzeugs 2 verbunden ist. Die Einzelheiten der Hubeinrichtung 4 und der Koppelpunkte 16,17 sind in der Norm ISO 730 beschrieben. Die Koppelpunkte sind Bestandteil des Grundrahmens 4, welcher neben anderen Komponenten aus Querträgern 18 sowie inneren und äußeren Längsträgern 19, 20 besteht. An den Querträgern sind die Bodenbearbeitungswerkzeuge in einer oder mehreren Reihen seitlich zueinander beanstandet befestigt. Die Bodenbearbeitungswerkzeuge sind hier als drehbare, den Boden schneidende Hohlscheiben ausgeführt. Auch andere Schar- und Zinkenwerkzeuge sind denkbar. Eine Überlastsicherung der Werkzeuge kann als Abschersicherung oder federnd dargestellt werden. Ein in der Höhe verstellbarer Niederhalter 21 führt den durch die Bodenbearbeitungswerkzeuge 5 bei der Arbeit aufgeworfenen Erdstrom zurück vor die folgenden Bodenbearbeitungswerkzeuge. Das zusätzliche Bodenbearbeitungsgerät 6 ist über den Rahmen 7 mit seinen Seitenarmen 22 an den Gelenkpunkten 9 drehbar und in der Höhe beweglich mit den äußeren Längsträgern 19 des Grundrahmens 4 über Bolzen-, Schraub oder andere Lagerverbindungen befestigt. Über Steckstifte, Schrauben oder Bolzen kann mittels eines Lochbildes 23 in den Seitenarmen 22 des Rahmens 7 und dazu passenden Ausnehmungen oder Anschlägen an den Längsträgern 19 die Höhe und die Beweglichkeit des zusätzlichen Bodenbearbeitungsgerätes 6 eingestellt oder in einer oder beiden Richtungen begrenzt werden. Weitere Einebnungselemente 24 sind an den Seitenarmen 22 des zusätzlichen Bodenbearbeitungsgerätes 6 höhenverstellbar und mit diesem zusammen beweglich angebracht. Das zusätzliche Bodenbearbeitungsgerät 6 selbst besteht zum Beispiel aus mehreren in einander greifenden Bodenbearbeitungswerkzeugen 8, welche hier als drehbare Walzen an dem Rahmen 7 mit geeigneten Rollenlagern gelagert sind und zur Verdichtung des durch die Bodenbearbeitungswerkzeuge 5 aufgelockerten Bodens 14 dienen. Auch andere Einebnungs- und Zerkleinerungswerkzeuge sind denkbar, welche auch als Untereinheit zum Beispiel über Schnellwechselsysteme oder Schnellkuppler austauschbar sind. Die Bodenbearbeitungswerkzeuge können auch durch Fremdenergie angetrieben sein. Gemeint sind hier auch Bodenbearbeitungsgeräte zum Einbringen von Dünger, Saatgut oder anderen landwirtschaftlichen Stoffen in den Boden. Oberhalb der zusätzlichen Bodenbearbeitungseinrichtung 6 ist das Fahrwerk 10 mit seinem Fahrwerksrahmen 12 drehbar an dem Gelenkpunkt angeordnet, welcher aus einer Bolzengelenkverbindung sowie dazu passenden Lagerbohrungen besteht, welche am hinteren Ende der mittleren Längsträger 20 sowie am vorderen Teil des Fahrwerksrahmens 12 vorgesehen sind. Hierdurch ist der Fahrwerksrahmen 12 höhenbeweglich. Am anderen Ende des Fahrwerksrahmens 12 ist ein Laufrad 11 in Form eines dem Fachmann geläufigen Spornrades angebracht. Das Spornrad ist um eine eher vertikale Achse frei drehbar gelagert und stellt seine Laufrichtung bei Bodenkontakt selbsttätig zur Fahrtrichtung des Zugfahrzeuges ein. Im vorderen Drittel des Fahrwerksrahmens sind zwei Laschen 26 an diesem befestigt. Unterhalb dieser Laschen 26 sind zwei weitere Laschen 25 annähernd mittig am Rahmen 7 der zusätzlichen Bodenbearbeitungseinrichtung 6 befestigt. Ein Verbindungselement oder -glied 15 in Form eines Getriebekoppels verbindet diese Laschen mittels Bolzen oder Schrauben frei drehbar. Das Getriebekoppel kann in seiner Länge beweglich, elastisch, oder mehrteilig ausgeführt sein. Somit ergibt sich über den Grundrahmen 4 mit seinen Gelenkpunkten 9 und 13, dem Rahmen 7 mit seinen Laschen 25, dem Fahrwerksrahmen 12 mit seinen Laschen 26 sowie dem Verbindungselement 15 ein Viergelenkkoppel als Getriebemechanismus. Durch diese Getriebeanordnung ist der Grundrahmen mit seinem Eigengewicht in der Lage, bei Kontakt der Bodenbearbeitungswerkzeuge 8 zum Boden 14 das Fahrwerk 10 mit seinem Laufrad 11 über den Boden anzuheben. Wird das Bodenbearbeitungsgerät 1 nun durch die Hubeinrichtung 3 des Zugfahrzeuges 2 ausgehoben, verlieren die Bodenbearbeitungswerkzeuge 8 den Kontakt zum Boden 9. Das Fahrwerk 10 mit seinem Laufrad 11 senkt sich auf den Boden ab und trägt über das Verbindungselement 15 einen großen Teil des Gewichtes der zusätzlichen Bodenbearbeitungseinrichtung. Der Hubkraftbedarf der Hubeinrichtung und die Achsbelastung des Zugfahrzeuges 2 werden dadurch verbessert. Zur besseren Sichtbarkeit im Straßenverkehr ist das Fahrwerk mit Warntafeln 27 und daran angebrachten Leuchten versehen. In Fig. 1 ist eine Warntafel 27 der Sichtbarkeit auf das Laufrad 11 weggelassen.

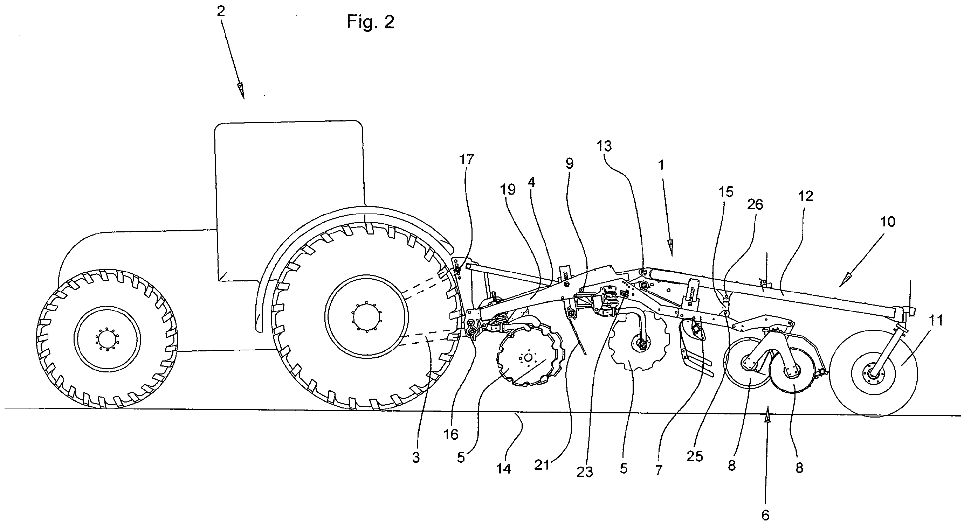

In Fig. 2 hat die Zugmaschine 2 mit seiner Hubeinrichtung 3 das Bodenbearbeitungsgerät ausgehoben. Das Fahrwerk 10 behält über sein Laufrad 11 weiterhin Kontakt zum Boden 14. Gut ersichtlich ist, dass das Gewicht der zusätzlichen Bodenbearbeitungseinrichtung 6 über das mehrteilige Verbindungselement 15 auf den Fahrwerksrahmen 12 und das Laufrad 11 übertragen wird. Nur ein Teil des Gewichtes überträgt sich über den Gelenkpunkt 13 auf den Grundrahmen 4. Die zusätzliche Bodenbearbeitungseinrichtung 6 besitzt nun eine ausreichend hohe Bodenfreiheit für Straßen- und Wendefahrt.

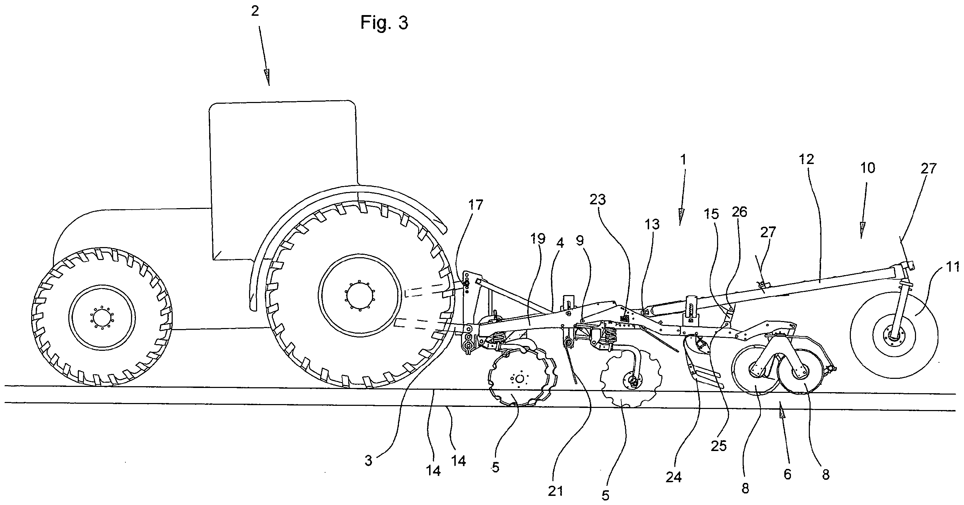

Fig. 3 stellt abweichend zu Fig. 2 den abgesenkten Zustand dar. Die vorderen Bodenbearbeitungswerkzeuge 5 schneiden, mischen und lockern den Boden. Die dahinter folgenden Einebnungselemente 24 ebnen das aufgeworfene Erdreich wieder ein. Durch die zusätzliche Bodenbearbeitungseinrichtung 6 mit deren rollenden Bodenbearbeitungswerkzeugen 8 wird der gelockerte Boden 14 wiederum verdichtet, um eine ausreichende Kapillarwirkung für die nachfolgende Saat zu gewährleisten. Das Fahrgestell 10 wird über das Verbindungselement oder-glied 15 nach oben verlagert, das Laufrad 11 hat keinen Bodenkontakt mehr und verursacht auch keine für nachfolgende Arbeiten störende Fahrspuren des Laufrades 11. Das Gewicht des Fahrgestelles 10 überträgt sich zudem wirkungsverbessernd auf die zusätzliche Bodenbearbeitungseinrichtung 6.

## Patentansprüche

1. Bodenbearbeitungsgerät (1), welches zum Anbau an eine Hubeinrichtung (3) eines Zugfahrzeuges (2) vorgesehen und über die Koppelpunkte (16, 17) mit der Hubeinrichtung (3) des Zugfahrzeugs (2) verbindbar ist, wobei das Bodenbearbeitungsgerät (1) mit einem Grundrahmen (4) und daran angeordneten Bodenbearbeitungswerkzeugen (5) ausgestattet ist, wobei an dem Grundrahmen (4) mindestens eine zusätzliche Bodenbearbeitungseinrichtung (6) vorgesehen ist, welche aus einem weiteren Rahmen (7) und daran angeordneten Bodenbearbeitungswerkzeugen (8) besteht, wobei die zusätzliche Bodenbearbeitungseinrichtung (6) über mindestens einen Gelenkpunkt (9) in der Höhe beweglich zu dem Grundrahmen (4) angeordnet ist, wobei die Beweglichkeit durch Begrenzungsmittel eingeschränkt werden kann,
**dadurch gekennzeichnet,**
**dass** zumindest ein Fahrwerk (10), bestehend aus mindestens einem Laufrad (11) und mindestens einem Fahrwerksrahmen (12), ebenfalls über mindestens einen Gelenkpunkt (13) in der Höhe beweglich zu dem Grundrahmen (4) angeordnet ist, wobei in einer abgesenkten Position die Bodenbearbeitungswerkzeuge (5) und die zusätzliche Bodenbearbeitungseinrichtung (6) mit dem Boden (14) in Wirkverbindung stehen und in einer angehobenen Position oberhalb des Bodens (14) ausgehoben sind, wobei das Fahrwerk (10) mit zumindest einem Verbindungselement (15) mit der zusätzlichen Bodenbearbeitungseinrichtung (6) in Verbindung steht, wobei das zumindest eine Verbindungselement (15) in einer angehobenen Position des Bodenbearbeitungsgerätes (1) zum Zugfahrzeug (2) einen Teil des Gewichtes der zusätzlichen Bodenbearbeitungseinrichtung (6) auf das Fahrwerk (10) zum Boden (14) hin und den anderen Teil des Gewichtes auf den Grundrahmen (4) übertragend und in einer abgesenkten Position des Bodenbearbeitungsgerätes (1) zum Zugfahrzeug (2) einen Teil des Gewichtes des Fahrwerkes (10) auf die zusätzliche Bodenbearbeitungseinrichtung (6) zum Boden (9) hin übertragend ausgebildet oder angeordnet ist.

2. Bodenbearbeitungsgerät nach Anspruch 1,
**dadurch gekennzeichnet,**
**dass** das Verbindungselement (15) zwischen dem Rahmen (7) der zusätzlichen Bodenbearbeitungseinrichtung (6) und dem Fahrwerksrahmen (12) positioniert ist.

3. Bodenbearbeitungsgerät nach Anspruch 1,
**dadurch gekennzeichnet,**
**dass** das Verbindungselement (15) als Getriebekoppel ausgebildet ist.

4. Bodenbearbeitungsgerät nach Anspruch 3,
**dadurch gekennzeichnet,**
**dass** der Grundrahmen (4), der Rahmen (7), der Fahrwerksrahmen (12) und das Verbindungselement (15) ein bewegliches Viergelenk bilden.

5. Bodenbearbeitungsgerät nach Anspruch 1,
**dadurch gekennzeichnet,**
**dass** das Verbindungselement (15) eine dem Rahmen (7) zugeordnete Lasche (25) und eine dem Fahrwerksrahmen (12) zugeordnete Lasche (26) aufweist, wobei beide Laschen (25, 26) mittels mindestens eines Verbindungsmittels miteinander verbunden sind.

6. Bodenbearbeitungsgerät nach Anspruch 1,
**dadurch gekennzeichnet,**
**dass** das zumindest eine Laufrad (11) lenk- oder drehbar zum Fahrwerksrahmen (12) angeordnet ist.

7. Bodenbearbeitungsgerät nach Anspruch 1 oder 6,
**dadurch gekennzeichnet,**
**dass** das Fahrwerk (10) durch zusätzliche Mittel in seiner Bewegung zum Grundrahmen (4) hin arretierbar ausgebildet ist.

8. Bodenbearbeitungsgerät nach vorstehenden Ansprüchen,
**dadurch gekennzeichnet,**
**dass** Mittel zur Begrenzung der Beweglichkeit der zusätzlichen Bodenbearbeitungseinrichtung (6) vorgesehen sind, welche durch Fremdkraft in einer oder mehreren Wirkrichtungen verstellbar ausgebildet sind.

9. Bodenbearbeitungsgerät nach vorstehenden Ansprüchen,
**dadurch gekennzeichnet,**
**dass** der Fahrwerksrahmen (12) vorzugweise einarmig oder aus einem einzigen Ausleger bestehend ausgebildet ist.

10. Bodenbearbeitungsgerät nach vorstehenden Ansprüchen,
**dadurch gekennzeichnet,**
**dass** das Bodenbearbeitungsgerät (1) von einer größeren Breite in Arbeitsstellung in eine kleinere Breite in Transportstellung und umgekehrt klappbar oder veränderbar ist.

11. Bodenbearbeitungsgerät nach vorstehenden Ansprüchen,
**dadurch gekennzeichnet,**
**dass** das zusätzliche Bodenbearbeitungsgerät (6) aus mehreren Segmenten besteht, wobei den Segmenten und / oder dem Fahrwerk (10) zumindest eine weitere Quertraverse zugeordnet ist, welche die Segmente des zusätzlichen Bodenbearbeitungsgerätes (6) und das Fahrwerk (10) zumindest mittelbar miteinander verbindet.

12. Bodenbearbeitungsgerät nach vorstehenden Ansprüchen,
**dadurch gekennzeichnet,**
**dass** ein zusätzliches Tragfahrzeug, welches mit einer Hubeinrichtung versehen ist, dem Bodenbearbeitungsgerät zugeordnet ist.

## Claims

1. Soil cultivation implement (1) that is planned to be attached to a lifting device (3) of a towing vehicle (2) and is to be connected to the lifting device (3) of the towing vehicle (2) through the coupling points (16, 17), whereby the soil cultivation implement (1) is equipped with a base frame (4) and soil cultivation tools (5) arranged on this, whereby at least one additional soil cultivation device (6) consisting of an additional frame (7) and soil cultivation tools (8) arranged on this is planned for the base frame (4), whereby the additional soil cultivation device (6) is arranged to be lifted with regard to the base frame (4) by at least one articulation point (9), whereby the mobility can be restricted by limitation means, **characterised in that**
at least one chassis (10), consisting at least of one running wheel (11) and at least of one chassis frame (12), is also arranged to be height adjustable with regard to the base frame (4) through at least one articulation point (13), whereby in a lowered position the soil cultivation tools (5) and the additional soil cultivation device (6) are in operative connection with the ground (14) and in a raised position are lifted above the ground (14), whereby the chassis (10) is connected with the additional soil cultivation device (6) with at least one connection element (15), whereby in a raised position of the soil cultivation implement (1) to the towing vehicle (2) the at least one connection element (15) is designed or arranged to transmit a part of the weight of the additional soil cultivation device (6) to the chassis (10) towards the ground (14) and the other part of the weight to the base frame (4), and in a lowered position of the soil cultivation implement (1) towards the towing vehicle (2) a part of the weight of the chassis (10) to the additional soil cultivation device (6) towards the ground (9).

2. Soil cultivation implement in accordance with claim 1,
**characterised in that**
the connection element (15) is positioned between the frame (7) of the additional soil cultivation device (6) and the chassis frame (12).

3. Soil cultivation implement in accordance with claim 1, **characterised in that**
the connection element (15) is designed as a transmission coupler.

4. Soil cultivation implement in accordance with claim 3, **characterised in that**
the base frame (4), the frame (7), the chassis frame (12) and the connection element (15) form an articulated quadruple link.

5. Soil cultivation implement in accordance with claim 1, **characterised in that**
the connection element (15) has a bracket (25) assigned to the frame (7) and a bracket (26) assigned to the chassis frame (12), whereby the two brackets (25, 26) are connected to one another by means of at least one connecting means.

6. Soil cultivation implement in accordance with claim 1,
**characterised in that**
at least one running wheel (11) as arranged to be steerable or rotatable towards the chassis frame (12).

7. Soil cultivation implement in accordance with claim 1 or 6, **characterised in that**
the chassis (10) is designed to be lockable in its movement towards the base frame (4) by additional means.

8. Soil cultivation implement in accordance with the above claims, **characterised in that**
means are provided to limit the mobility of the additional soil cultivation device (6) that are designed to be adjustable in one or more working directions by external power.

9. Soil cultivation implement in accordance with the above claims, **characterised in that**
the chassis frame (12) is designed preferably as a single arm or consisting of a single jib.

10. Soil cultivation implement in accordance with the above claims, **characterised in that**
the soil cultivation implement (1) can be folded or altered from a larger width in the working position to a smaller width in the transport positon and vice versa.

11. Soil cultivation implement in accordance with the above claims, **characterised in that**
the additional soil cultivation implement (6) consists of several segments, whereby at least one additional crosspiece is assigned to the segments and / or the chassis (10) that connects the segments of the additional soil cultivation implement (6) and the chassis (10) to each other at least indirectly.

12. Soil cultivation implement in accordance with the above claims, **characterised in that**
an additional carrier vehicle, which is equipped with a lifting device, is assigned to the soil cultivation implement.

## Revendications

1. Machine pour le travail du sol (1) destinée à être attelée au dispositif de levage (3) d'un véhicule tracteur (2) et pour relier par l'intermédiaire des points de couplage (16, 17) avec le dispositif de levage (3) du véhicule tracteur (2), sachant que la machine pour le travail du sol (1) est équipée d'un cadre de base (4) et des outils de travail du sol (5) qui y sont disposés, sachant que sur le cadre de base (4) est prévu au moins un dispositif de travail du sol supplémentaire (6) qui consiste en un autre cadre (7) et en outils de travail du sol (8) qui y sont disposés, sachant que le dispositif de travail du sol supplémentaire (6) est disposé par l'intermédiaire d'au moins un point articulé (9) en étant mobile en hauteur par rapport au cadre de base (4), sachant que cette mobilité peut être limitée par des moyens de limitation,
**caractérisée par le fait**
**qu'**au moins un train (10), consistant en au moins une roue (11) et au moins un cadre du train (12), est disposé également par l'intermédiaire d'au moins un point articulé (13) de façon mobile en hauteur par rapport au cadre de base (4), sachant que dans une position abaissée, les outils de travail du sol (5) et le dispositif de travail du sol supplémentaire (6) sont en contact effectif avec le sol (14) et qu'ils sont soulevés hors du sol (14) en position relevée, sachant que le train (10) est relié par au moins un élément de liaison (15) avec le dispositif de travail du sol supplémentaire (6), sachant qu'au moins un élément de liaison (15) est réalisé ou disposé en position soulevée de la machine pour le travail du sol (1) par rapport au véhicule tracteur (2) en transmettant une partie du poids du dispositif de travail du sol supplémentaire (6) sur le train (10) vers le sol (14) et l'autre partie du poids sur le cadre de base (4), et en transmettant dans une position abaissée de la machine pour le travail du sol (1) par rapport au véhicule tracteur (2) une partie du poids du train (10) sur le dispositif de travail du sol supplémentaire (6) vers le sol (9).

2. Machine pour le travail du sol selon la revendication 1, **caractérisée par le fait**
**que** l'élément de liaison (15) est positionné entre le cadre (7) du dispositif de travail du sol supplémentaire (6) et le cadre du train (12).

3. Machine pour le travail du sol selon la revendication 1, **caractérisée par le fait**
**que** l'élément de liaison (15) est constitué sous la forme d'un couplage d'engrenage.

4. Machine pour le travail du sol selon la revendication 3, **caractérisée par le fait**
**que** le cadre de base (4), le cadre (7), le cadre du train (12) et l'élément de liaison (15) forment un quadrilatère articulé mobile.

5. Machine pour le travail du sol selon la revendication 1, **caractérisée par le fait**
**que** l'élément de liaison (15) présente une languette (25) attribuée au cadre (7) et une languette (26) attribuée au cadre du train (12), sachant que les deux languettes (25, 26) sont reliées l'une à l'autre par le biais d'au moins un moyen de liaison.

6. Machine pour le travail du sol selon la revendication 1, **caractérisée par le fait**
**qu'**au moins une roue (11) est disposée de façon à pouvoir être guidée ou tournée par rapport au cadre du train (12).

7. Machine pour le travail du sol selon la revendication 1 ou 6, **caractérisée par le fait**
**que** le train (10) est constitué de façon à pouvoir être arrêté par des moyens supplémentaires dans son déplacement par rapport au cadre de base (4).

8. Machine pour le travail du sol selon les revendications précédentes, **caractérisée par le fait**
**que** des moyens sont prévus pour limiter la mobilité du dispositif de travail du sol supplémentaire (6), qui sont réalisés de façon à pouvoir être réglés par une force extérieure ou plusieurs dispositifs effectifs.

9. Machine pour le travail du sol selon les revendications précédentes, **caractérisée par le fait**
**que** le cadre du train (12) est constitué de préférence avec un bras ou une seule flèche.

10. Machine pour le travail du sol selon les revendications précédentes, **caractérisée par le fait**
**que** la machine pour le travail du sol (1) peut être rabattue ou modifiée d'une plus grande largeur en position de travail à une plus petite largeur en position de transport et inversement.

11. Machine pour le travail du sol selon les revendications précédentes, **caractérisée par le fait**
**que** la machine pour le travail du sol (6) supplémentaire consiste en plusieurs segments, sachant qu'aux segments et / ou au train (10) est attribuée moins une autre traverse transversale qui relie, au moins de façon indirecte, les segments de la machine pour le travail du sol (6) au train (10).

12. Machine pour le travail du sol selon les revendications précédentes, **caractérisée par le fait**
**qu'**un véhicule porteur supplémentaire, qui est équipé d'un dispositif de levage, est attribué à la machine pour le travail du sol.
